# EUROPEAN PATENT SPECIFICATION

(11) **EP 4 142 959 B1**
(45) Date of publication and mention of the grant of the patent: **11.11.2026**
(21) Application number: 21721026.9
(22) Date of filing: 20.04.2021
(51) Int. Cl.: B21D 22/28, B21D 51/26, G01B 7/06, G01N 21/90, G01N 27/90, G01N 27/9013

(54) **METHOD AND APPARATUS FOR DETECTING DEFECTS OR DETERIORATION IN THE SIDEWALLS OF CAN BODIES**
VERFAHREN UND VORRICHTUNG ZUM FESTSTELLEN VON DEFEKTEN ODER VON SCHÄDEN IN DEN SEITENWÄNDEN VON DOSENKÖRPERN
PROCÉDÉ ET APPAREIL DE DÉTECTION DE DÉFAUTS OU DE DÉTÉRIORATION DANS LES PAROIS LATÉRALES DE CORPS DE BOÎTE

(30) Priority: 01.05.2020 GB 202006453
(43) Date of publication of application: 08.03.2023
(60) Divisional application: 26210218.9
(73) Proprietor: Crown Packaging Technology, Inc., Tinley Park, IL 60487-9286 (US)
(72) Inventor: HALSTEAD, Michael, Wantage Oxfordshire OX12 9BP (GB); BAILEY, Damien Andrew, Wantage Oxfordshire OX12 9BP (GB); EGERTON, Daniel, Wantage Oxfordshire OX12 9BP (GB)
(74) Representative: Marks & Clerk LLP
(86) International application number: PCT/EP2021/060197
(87) International publication number: WO 2021/219431

(56) References cited:
- EP-A1- 3 490 736
- GB-A- 2 141 063
- GB-A- 2 271 072
- GB-A- 2 561 859
- US-A- 5 130 653

## Description

### Technical Field

The present invention relates to diagnostics for can bodymakers. In particular, it relates to a method and apparatus for monitoring the can bodies being produced by a can bodymaker.

### Background

In known can bodymakers for the production of thin-walled metal two-piece can bodies by a "drawing and wall-ironing" (DWI) process, metal cups are fed to the bodymaker and carried by a punch on the end of a ram through a series of dies to produce a can body of the desired size and thickness. The series of dies may include a redraw die for reducing the diameter of the cup and lengthening its sidewall, and one or more ironing dies for wall-ironing the cup into a can body. The area or cradle of the bodymaker frame within which the dies are located is known as the "tool pack". The can body carried on the punch may ultimately contact a bottom forming tool or "domer" so as to form a shape such as a dome on the base of the can. An exemplary bodymaker is described in WO9934942.

Can bodymakers are typically operated for extended periods at high speed to produce more than around 300 to 400 can bodies per minute. However, the quality of the can bodies that are produced can vary significantly over time because of changes in, for example: the alignment of the machine components, coolant temperature and flow rate, lubrication of the machine, and/or the quality of the incoming cups (e.g. due to variations in the quality of the metal coil from which the cups are made).

During the DWI process, the metal is subject to loads as the punch forces it through the ironing dies. However, the magnitude and distribution of these loads changes both during the stroke and from stroke to stroke, leading to variations in the quality of the can bodies produced. For example, frictional forces and general wear will cause the alignment of the ram to vary slightly over time. In addition, a high speed reciprocating ram is generally subject to at least some vibration, due to the impact of the ram on the can body and to the variable "droop" of the ram as it moves from and to its fully-extended position.

As a further example, when the ram carries the can body into contact with the domer, any misalignment can lead to the can body end splitting, particularly if the can body is made from aluminium. If the misalignment is slight, the split (sometimes known as a "smile") may not be immediately visible to the naked eye, and the split may lead to the can bursting once the can body has been filled. This may not occur until the filled can has been purchased.

Poor quality can bodies may lead to wastage and downtime in can production. This may occur, for example, either because the bodymaker itself must be re-aligned or repaired (which requires skilled operators) or because other machines further down the production line are adversely affected by the poor quality cans being produced. Unfortunately, the high speed, high volume nature of the can production industry means that lost production time can be very costly for producers.

One type of can defect is a crooked, untrimmed edge of the can body, commonly referred to as a "sugar scoop" because of the can body's resemblance to the bowl-shaped end of this type of utensil. Sugar scoop defects can arise in a number of ways: (i) the cups provided to the bodymaker are themselves crooked (and the defect may be exaggerated by the DWI process); (ii) the cup is not correctly centred with respect to the punch (e.g. because the punch is not aligned to the cup locator and/or redraw sleeve); (iii) the ironing dies are misaligned with respect to the punch, leading to sidewall of the can body being thinned more on one side than the other; or (iv) the redraw die and/or ironing die(s) are damaged or worn.

In some cases, a defect in a can body may be so pronounced that the can body fails mechanically, leading to so-called "short can" or "tear off" in which a portion of the can body is left behind as debris within the can bodymaker. Typically, can production must be halted until the debris is removed to avoid damage to the bodymaker components or the production of poor quality cans. It is therefore important to be able to diagnose defects in can bodies before such catastrophic failure occurs.

One already known method of assessing can body quality involves pressing an arm of a mechanical gauge against the rim of the can body and rotating the can body about its axis to cause the arm to be displaced by varying amounts depending on the height of the rim. Although this method allows precise measurements of the can body to be made, it is far too slow to be performed for every can that is produced and requires can bodies to be removed (sampled) from the production line periodically. Problems may therefore go undiagnosed for some time, allowing significant numbers of poor quality cans to be produced and increasing the risk of a tear off occurring.

Can body diagnostic methods and apparatuses are known. For example, WO2018/020207, which forms the basis for the preamble of claims 1 and 13, describes a stripper assembly for a can bodymaker that comprises a radial offset monitor for detecting radial misalignment of a ram and/or a punch of a can bodymaker, or a can body held on the punch. "Short Can Sensor" products are commercially available from Sencon (UK) LTD.

### Summary

According to a first aspect of the present invention, there is provided a method of detecting defects or deterioration in the sidewalls of can bodies during production of the can bodies within a can bodymaker. Each can body is formed by pushing a cup, mounted on a punch of a reciprocating ram, through one or more dies contained within a tool pack of the bodymaker. The method comprises: obtaining output signals from one or more eddy current sensors arranged around the ram axis outside of the tool pack and adjacent to an exit end of the tool pack; processing the output signals to detect passage of open ends of can body sidewalls past the sensor(s) and thereby determine measures of the heights of can body sidewalls; and analysing the determined measures to identify can body sidewall defects or deterioration.

The one or more sensors may comprise a plurality of sensors spaced angularly apart from one another around the ram axis. The determined measures may comprise measures of the height of the sidewall of a can body for more than one location around the circumference of the can body.

The or each eddy current sensor may be mounted within a stripper housing comprising a stripper provided with stripping fingers.

The method may comprise determining whether each of the measures is within a pre-determined range. The measure is a measure of can sidewall height and the pre-determined range has a width of less than 10 mm, less than 5 mm, or less than 2 mm.

The method may comprise correlating the signal(s) with data indicative of the position of the ram along the ram axis. The position data may be obtained from a linear encoder or from a rotary encoder configured to be turned by a shaft used to drive the ram.

The method may comprise generating an operator alarm or notification in the event that can body sidewall defects or deterioration are identified.

Also described herein is a method of operating a can bodymaker. The method comprise using the method described above for the first aspect of the present invention to detect defects or deterioration in the sidewalls of can bodies during production and, in the event of such detection, adjusting one or more operating parameters of the bodymaker or of a production line within which the bodymaker is located, to mitigate the occurrence of defects or said deterioration.

The one or more operating parameters may include a rate of production.

The operating parameter may be a parameter of a component of the production line upstream or downstream of the bodymaker, for example a cup press.

Also described herein is a computer device comprising a processor configured to perform the method described above for the first aspect of the present invention or the above-described method of operating a can bodymaker.

According to a second aspect of the present invention, there is provided a computer program product comprising instructions, which, when executed by a computer, cause the computer to carry out the method described above for the first aspect of the present invention.

According to a third aspect of the present invention, there is provided an apparatus for detecting defects or deterioration in the sidewalls of can bodies during production of the can bodies within a can bodymaker. Each can body is formed by pushing a cup, mounted on a punch of a reciprocating ram, through one or more dies contained within a tool pack of the bodymaker. The apparatus comprises a housing disposed adjacent to the toolpack and within which are mounted one or more eddy current sensors. The housing and sensors are configured for attachment within the can bodymaker adjacent to the toolpack such that the or each sensor is arranged around the ram axis adjacent to an exit end of the tool pack. The apparatus further comprises a computer processing unit in wired or wireless communication with the or each sensor to receive therefrom the output signals of the sensor(s) and is configured to process the output signals to detect passage of open ends of can body sidewalls past the sensor(s) and to thereby determine measures of the heights of can body sidewalls, and to analyse the determined measures to identify can body sidewall defects or deterioration.

Also described herein is a system comprising a can bodymaker in combination with the apparatus of the preceding paragraph. The can bodymaker comprises a punch mounted on a reciprocating ram and one or more dies contained within a tool pack, the housing and sensors are attached within the can bodymaker such that the or each sensor is arranged around the ram axis adjacent to an exit end of the tool pack.

Also described herein is a method of operating a can bodymaker to mitigate the occurrence of defects or deterioration in the sidewalls of can bodies during production of the can bodies within the can bodymaker. Each can body is formed by pushing a cup, mounted on a punch of a reciprocating ram, through one or more dies contained within a tool pack of the bodymaker. The method comprises obtaining output signals from one or more sensors outside of the toolpack and arranged around the ram axis adjacent to an exit end of the tool pack and processing the output signals to detect passage of open ends of can body sidewalls past the sensor(s) and thereby determine measures of the heights of can body sidewalls. The method further comprises analysing the determined measures to identify can body sidewall defects or deterioration, and adjusting one or more operating parameters of the bodymaker, or of another component of a production line within which the bodymaker is located, to mitigate the occurrence of defects or said deterioration.

The one or more operating parameters may be selected from:
rate of can production (set speed of the can bodymaker);
operating temperature of the tool pack;
the rate or temperature at which coolant is supplied to the tool pack;
the rate at which lubricant is supplied to the tool pack; and
the domer position with respect to the ram axis.

Also described herein is a system for producing can bodies from cups. The system comprises a can bodymaker for forming a can body by pushing a cup, mounted on a punch of a reciprocating ram, through one or more dies contained within a tool pack of the bodymaker. The system also comprises a housing disposed adjacent to the tool pack and within which are mounted one or more sensors. The housing and sensors are attached within the can bodymaker such that the or each sensor is arranged around the ram axis adjacent to an exit end of the tool pack. The system further comprises a computer processing unit in wired or wireless communication with the or each sensor to receive therefrom the output signals of the sensor(s) and is configured to process the output signals to detect passage of open ends of can body sidewalls past the sensor(s) and to thereby determine measures of the heights of can body sidewalls. The computer processing unit is also configured to analyse the determined measures to identify can body sidewall defects or deterioration, and to adjust one or more operating parameters of the bodymaker, or of another component of a production line within which the bodymaker is located, to mitigate the occurrence of defects or said deterioration.

The one or more operating parameters may be selected from:
rate of can production (set speed of the can bodymaker);
operating temperature of the tool pack;
the rate or temperature at which coolant is supplied to the tool pack;
the rate at which lubricant is supplied to the tool pack; and
the domer position with respect to the ram axis.

### Brief Description of the Drawings

Figure 1 is a schematic perspective view of a can bodymaker; and
Figure 2 is a schematic cross section view of part of the can bodymaker showing a can body moving, on the end of a ram, between two sensors.
Figure 3 is a graph illustrating an output signal from one or the sensors of Figure 2 as a function of time;
Figure 4 is a graph illustrating measurements derived from output signals produced by an array of sensors;
Figure 5 is a schematic perspective view of a plurality of sensors integrated into a stripper housing; and
Figure 6 is schematic cross-sectional perspective view of the stripper housing of Figure 5 with the stripper mounted to the housing.

### Detailed Description

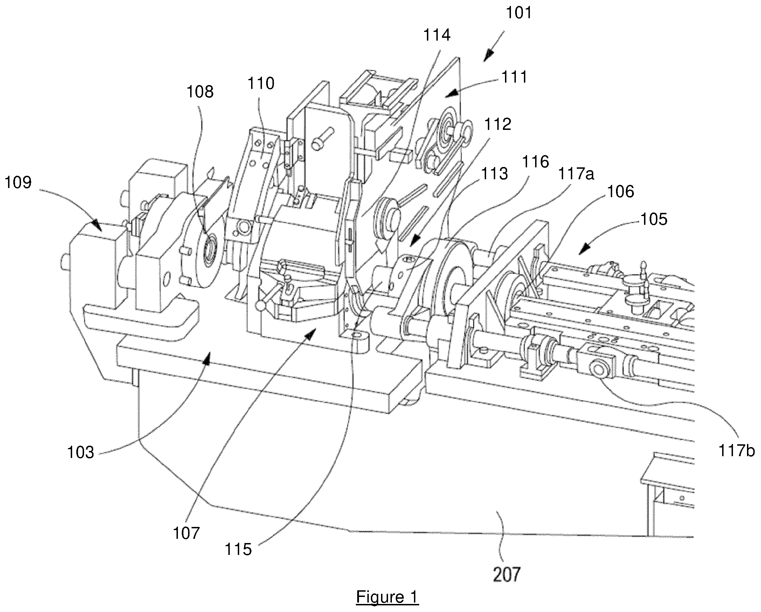

Figure 1 is a perspective schematic view of a modular bodymaker 101 for making can bodies from cups drawn from sheet metal. The bodymaker 101 comprises a base 102 which supports a machine bed 103 with a ram assembly 105. The ram assembly 105 comprises a reciprocating ram 106 with a punch (not shown) mounted on one end. During a forward stroke of the bodymaker 101, the punch contacts a cup (not shown) held in the path of the ram within a tool pack 107. The punch pushes the cup through a redraw die (not shown) contained within the tool pack 107 to form an elongated can body. The can body is carried on the punch to contact a bottom forming tool 108 housed by a domer module 109 so as to form a shape such as dome on the base of the can. On a return stroke of the bodymaker 101, the can body is removed from the punch by a stripper (not shown) of the tool pack 107. The can body is transported away from the ram axis by a can discharge turret 110 of an infeed-discharge module 111 located between the tool pack 107 and the domer module 109.

The tool pack 107 also comprises a redraw sleeve module 112, located in front of the redraw die (not shown) for positioning the cup during the redraw process. The redraw sleeve module 212 comprises a bearing 113 with a cup locator (not shown) to receive a cup from an infeed mechanism 114 of the infeed-discharge module 111. The bearing 113 supports a reciprocating redraw sleeve 115 that is aligned coaxially with the ram and has a central bore that allows the punch to pass therethrough. A rear end of the redraw sleeve 115 is coupled to a redraw carriage 116 that is driven in a reciprocating motion by a pair of push rods 117a, 117b located on opposite sides of the ram 106. Prior to the punch contacting the can, the redraw sleeve 115 enters the open end of the cup and forces the cup into contact with the redraw die. The redraw sleeve 115 holds the cup firmly in place against the redraw die as the punch pushes the cup through an aperture of the redraw die that is of smaller diameter than the cup. As the cup is drawn through the redraw die by the punch it reduces in diameter and its sidewall lengthens. The tool pack 107 may also contain one or more ironing dies or other tooling for forming the can body after the redraw die. The punch then carries the elongated cup away from the redraw sleeve module and through the remaining ironing dies and tooling.

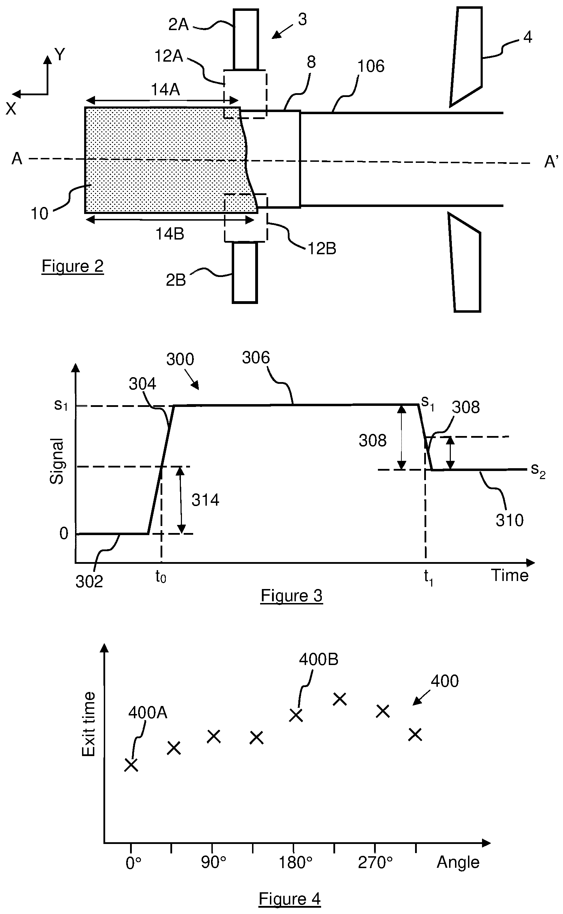

Figure 2 illustrates certain internal components of a portion of the can bodymaker 101 including a sensor array 3 positioned after an ironing die 4 and comprising eight sensors 2 (of which only two are visible in the figure, 2A, 2B) equally spaced around the circumference of a circle centred on the axis A-A' along which the ram 106 reciprocates. The figure shows the position of the punch 8 and ram 106 at an instant during the forward stroke of the ram 106 after a can body 10 mounted on the punch 8 has passed through the ironing die 4.

The sensors 2 are eddy current sensors, such as the eddyNCDT^{™} range manufactured by Micro-Epsilon^{™}, which can be used to measure distances to conductive objects with a very high degree of precision, e.g. a precision of less than 1 micrometre (1 micron). Advantageously, no contact with the object is required, such that measurement is wear-free. The eddy current sensors 2 each comprise a coil (not shown) inside an outer casing. The coil is supplied with a high-frequency alternating current in order to produce an electromagnetic field. The coil's electromagnetic field induces eddy currents in conductive materials (such as the material of can body 10) that create an opposing magnetic field that counteracts the magnetic field produced by the coil in accordance with Lenz's law. The sensors 2 are configured to produce a voltage output that depends on the strength of the opposing magnetic field, which is determined by the distance of the conductive material from the coil. The sensors 2 have an active area or "spot size" within which the conductive material needs to be located in order for a detectable output signal to be produced. For example, when the sensor is used to detect conductive material at a distance of around 3 mm, then the active area may be around 1cm², although shielding can be used to make the area smaller if necessary. Active areas 12A,B for the two illustrated sensors 2A,2B are indicated in Figure 2. The sensors 2 are oriented towards the axis A-A' such that the can body passes through their respective active areas as it is carried along the axis A-A' by the punch 8.

Eddy current sensors are preferred over other types of sensor, such as inductive proximity sensors, which generally have a lower time resolution, e.g. a time resolution of less than around 50 Hz (i.e. measurements per second), limited by the frequency response of the ferromagnetic core used in these sensors.

As noted above, eddy current sensors have previously been used for monitoring the radial alignment (or offset) of the punch/ram. To do this, the output signals from the sensors are typically processed to produce trajectories of the angular deflection of the punch/ram over time, either in the course of a single stroke or for multiple strokes. As the signals are dominated by the sensors detecting the punch/ram, such trajectories can provide useful diagnostic information about the radial alignment of these components with respect to the sensors. For example, radial misalignment of the ram with respect to the domer can be identified by the relatively large vibrational motion generated in the ram caused by the punch striking the domer off-centre. Surprisingly, however, the eddy current output signals can also be used to obtain useful diagnostic information about the height of the sidewall of the can body (as described below). This is possible despite the fact that the signal generated from the thin can sidewall has a smaller magnitude and shorter duration than the signals generated from the ram/punch. Eddy current sensors are particularly favourable for making these types of measurement because they can be operated at much higher frequencies (e.g. MHz frequencies) than other types of induction sensor, which allows for a temporal resolution that is high enough to resolve the movement of the can past the sensor precisely. A further benefit to using eddy current sensors is that it may not be necessary to calibrate them to account for variations in punch composition.

Figure 3 illustrates an exemplary output signal 300 (shown on the vertical axis) obtained from one of the sensors as a function of time (shown on the horizontal axis). The signal 300 comprises (in order of increasing time): a low value (e.g. zero) initial portion 302 corresponding to times before the base of the can body has entered the active area of the sensor; a rising edge 304 caused by an increasing proportion of the active area being filled by can body; a) a plateau portion 306 for which the signal is approximately constant with a value s₁ and corresponding to the can body completely filling the sensor active area; b) a falling edge 308 associated with a decreasing proportion of the can body leaving the active area and the punch and b) a later plateau region 310 for which the signal is approximately constant with a value s₂ and corresponding to the sensor detecting only the punch.

The output signal 300 produced collectively by the sensor is processed to determine an entry time t₀ associated with a given angular position on the can body entering the active area and a later exit time t₁ associated with that angular position exiting the active area 12. In the example shown in Figure 3, the entry time t₀ is determined from the rising edge 304 of the output signal 300 by identifying the value associated with the plateau portion 306 of the signal (e.g. by fitting a line through the data points of the signal 300) and then determining a time within the rising edge portion 304 at which the signal reaches half (or some other fraction) of the value s₁, e.g. by fitting an interpolation function (such as a polynomial or spline function) to the rising edge 304 and using a root finding algorithm (such as Newton's method) to determine the entry time t₀. An analogous procedure can be used to determine the exit time t₁ from the falling edge portion 308 of the signal 300 using the values s₁, s₂ associated with the neighbouring plateau regions 306, 310. Other methods of locating the rising and/or falling edges of the signals 300 can also be used. The entry and exit times t₀, t₁ can also be corrected using a heuristic function obtained by calibrating the entry and exit times for cans of different known heights.

The contributions to the signals 300 arising from the punch and/or ram can be removed by recording a "background" signal for which the can bodymaker is operated without a can body on the punch and then subtracting the background signal from the signals 300 obtained when the can bodymaker is operated normally. In some cases, the background signal may be an average (e.g. a mean) over more than one signal obtained without a can body on the punch.

Figure 4 is a graph showing the exit times 400 (the vertical axis of the graph) obtained by processing the signals 300 from each of the eight sensors of the sensor array and plotted as a function of the angle (the horizontal axis of the graph) of each sensor about the axis of the ram A-A'. The variation of the exit times 400 with respect to the angle arises from the variation in the height of the sidewall of the can body (identified in Figure 2 by reference numerals 14A,B) around its axis. For example, the exit time 400A determined from the signal 300 for sensor 2A is before the exit time 400B determined from the signal 300 from sensor 2B because the sidewall height 14A of the can body is less than the sidewall height 14B on the diametrically opposite side of the can body.

The exit times 400 for each of a series of can bodies can be compared with one another to assess the quality of the can body sidewalls of the series (either retaining angular information or looking at an average sidewall height per can body). For example, a measure of the spread of the exit times 400 can be calculated, such as the difference between the maximum and minimum of the exit times 400, or the standard deviation/variance of the exit times 400. The measure can be converted into a distance measure by multiplying it by the speed of the ram. If the measure (or distance measure) falls outside a predefined range then the produced can bodies may be identified as having a particular quality rating, e.g. a distance measure less than or equal to 50 microns may be identified as being acceptable, whilst a distance measure of more than 50 microns is deemed to indicate that the edges of the can bodies are of poor uniformity, e.g. that the can bodies suffer from a "sugar scoop" defect.

Alternatively, or additionally, the exit times 400 can be monitored to make sure that none of them falls outside of a predetermined range. For example, the exit times 400 obtained for different (e.g. successive) can bodies can be monitored for outliers or trends which may indicate wear or damage to the tooling of the bodymaker (e.g. ironing die) or a lack of uniformity in the cups fed into the can bodymaker, which may be caused by variations in the metal coil from which the cups are made.

The signals 300 and/or exit times 400 can be correlated with the longitudinal position data for the ram (and therefore, the punch) over the course of each stroke. This data may be obtained, for example, from a high-resolution rotary encoder that is turned by the shaft used to drive the reciprocating ram, or from a high-resolution linear encoder that measures the longitudinal position of the ram directly. This correlation makes it easier to identify the features in the signal data that correspond to the can body, rather than other features arising from noise or parts of the punch/ram that may be detected by the sensors. For example, the position data can be used to process the signals 300 to be functions of ram position rather time, so that only portions of the signals 300 corresponding to the end of punch being located close to or within the active areas of the sensors needs to be analysed. Additionally, the processing described above for the signals 300 as functions of time can be carried out analogously for the signals 300 as functions of ram position, which allows direct estimates of the heights of the sidewall of each can body to be estimated, without needing to estimate the velocity of the ram (which may vary from stroke-to-stroke).

Although multiple sensors around the ram axis allow variations in the height of the can body sidewalls to be determined, useful data can still be obtained using only a single sensor. For example, the data from a single sensor can be used to monitor for stroke-to-stroke trends and/or for outliers, which may be indicative of worsening alignment, wear, and/or variations in the feedstock metal.

The processing of the signals 300 obtained from the sensor array are carried out by a computer device (not shown) that uses an analogue to digital converter (ADC) to digitise the signals 300, the signals having been provided to the computer device by a wired or wireless connection. The computer device comprises a memory storing instructions for processing the signals 300 according to the method described above and a processor for carrying out the instructions. The instructions may be provided to the computer device from a computer-readable non-transient storage medium or other computer program product, such as computer program downloaded from the internet. The sensor data 300 and/or the times obtained by processing the data may be logged by the computer device, e.g. in a database, for later retrieval and analysis or to generate a "quality control" report of a particular period of can production or batch of cans. The computer device may also be used to control the can bodymaker based on the exit times 400 obtained by processing the sensor signals 300, e.g. to halt can production if the exit times 400 do not satisfy one or more criteria or to adjust one or more operating parameters (such as the set speed/repetition rate) of the can bodymaker depending on the exit times 400.

The measurements 300 obtained from the sensor array 500 during can production can be analysed using machine learning, analytics and/or artificial intelligence techniques to determine how the operation of the can bodymaker can be improved. For example, an evolutionary algorithm (or another type of optimisation algorithm) can be used to vary operating parameters of the can bodymaker according to a fitness metric based on the exit times 400 (e.g. based on what proportion of the cans are produced with sidewall heights that are within a predetermined range).

The operating parameters for the can bodymaker that are provided to the algorithm and/or controlled may include one or more of: the rate of can production (set speed of the can bodymaker), the operating temperature of the tool pack, the rate at which coolant is supplied to the tool pack, the rate at which lubricant is supplied to the tool pack, the rate at which blanks are fed into the bodymaker, and the domer position (alignment) with respect to the ram axis. The algorithm may also take as an input other types of data, such as the time elapsed since the can bodymaker was last serviced or reconfigured, the number of can produced using the current set of dies, and/or a measurement of the quality of the feedstock, such as the thickness or weight of the cups supplied to the bodymaker.

In some cases, the optimisation algorithm can be used to optimise (e.g. maximise) a particular parameter, subject to a constraint on the heights of the sidewalls of the cans as determined from the data 300 from the sensor array 500, e.g. the can production rate can be optimised subject to the sidewall heights remaining in an acceptable range (and provided the other operating parameters remain within acceptable/safe ranges too).

Feedback control can also be used to adjust one or more of the can bodymaker operating parameters in order to compensate for changes to the can bodymaker over time caused by wear or movement of the components in the can bodymaker. For example, a proportional-integral-derivative (PID) controller can be used to vary the can bodymaker operating parameters to minimise an error signal determined from the exit times 400 as a function of the operating parameters of the can bodymaker.

Feedback control can extend to other upstream and downstream components of the can production line including the bodymaker. For example, feedback can be used to control components such as an upstream cup press. Where several sources of blanks lie upstream of a bodymaker, the detection of defects may be traced back to a particular cup press and that press controlled, e.g. shut down, accordingly. Defects may also be traced back to a particular metal coil feed.

The tracing of the source of defects identified using the system described above may be aided by markings or other readable data on the blanks fed into the bodymaker. For example, laser etched markings may be read within the bodymaker, or at an output thereof, and correlated with can quality data.

Clustering or other types of classification algorithms can also be used to identify changes in the quality of the cans being produced, e.g. as a result of damage to one or more of the tool pack components (such as one of the dies) or the ram becoming misaligned.

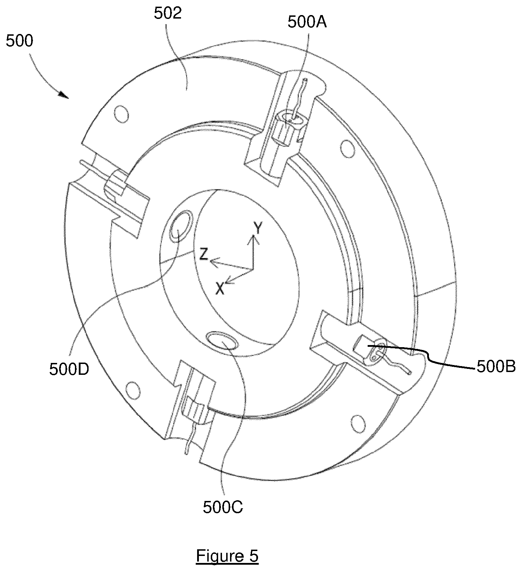

Figure 5 illustrates an exemplary sensor array 500 comprising a plurality of sensors 500A-D housed within the outer circumference of a stripper housing 502, which takes the form of a generally annular ring. In this example, there are four sensors 500A-D equally spaced around the stripper housing 502, although fewer, or additional sensors, may be used (as discussed above). The housing 502 comprises an internal bore configured to accommodate a can body of specific diameter, located on the punch. The stripper housing 502 is mounted to the tool pack 107 after the tool pack cradle (not shown). Positioning the sensors 500A-D in the stripper housing 502 allows the tooling (i.e. tool pack components) to remain unchanged, and affords a degree of protection for the sensors when the tooling is replaced.

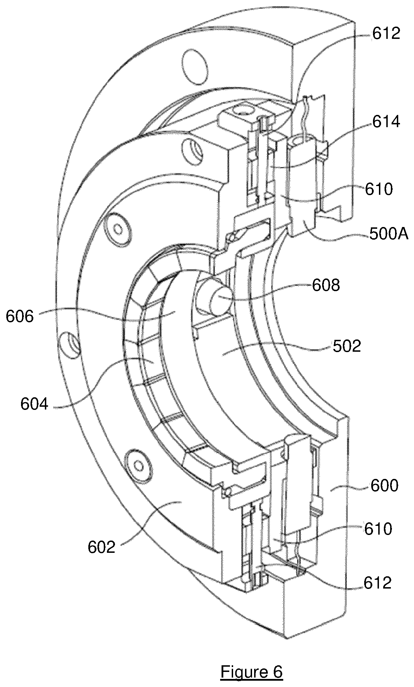

Figure 6 is a perspective cross-sectional view of an adapter plate 600 that is attached to the tool pack 107 (not shown) and on which the stripper housing 502 is mounted. A steel stripper is held in place on the stripper housing 502 by a retaining ring 604 and an stripper adapter ring 606. Although a steel stripper is shown in this example, a plastic stripper, or an alternative stripper, can also be used. An air gap (is provided around each sensor face 608, such that the sensor face 608 does not come into contact with the stripper housing 502.

The stripper housing 502 is configured to accommodate four adjustment mechanisms, one adjacent to each eddy current sensor 500A-D. In this example, each adjustment mechanism comprises a miniature high precision ball screw 610 and a guide mechanism 612. The ball screw 610 converts rotary motion to linear motion. Each screw 610 comprises a moveable collar 614 attached to the guide mechanism 612, which is in turn attached to the adjacent eddy current sensor 500A-D.

Upon manual or automatic adjustment of the ball screw 610, the collar 614, guide mechanism 612 and hence the eddy current sensor 500A can be adjusted in a direction orthogonal to the inner face of the stripper housing 502. In other words, the eddy current sensor 500A can be adjusted, or screwed in or out, so that the face of the sensor 608 either protrudes from, is flush with or is recessed into the inner face of the stripper housing 502. It will be appreciated that the position of the sensor face 500A can be adjusted depending upon the diameter of the ram 106 which is to be used, or to optimise the signals 300 obtained from the sensors 500A-D so as to minimise the "background" signal arising from the punch rather than the can body.

## Claims

1. A method of detecting defects or deterioration in the sidewalls of can bodies (10) during production of the can bodies within a can bodymaker (101), each can body being formed by pushing a cup, mounted on a punch (8) of a reciprocating ram (106), through one or more dies (4) contained within a tool pack (107) of the bodymaker, the method comprising:
obtaining output signals (300) from one or more eddy current sensors (2, 2A-B, 500A-D) arranged around the ram axis (A-A') outside of the tool pack and adjacent to an exit end of the tool pack,
the method **characterised by**:
processing the output signals to detect passage of open ends of can body sidewalls past the sensor(s) and thereby determine measures of the heights (14A, 14B)of can body sidewalls; and
analysing the determined measures to identify can body sidewall defects or deterioration.

2. A method according to claim 1, wherein the one or more sensors (2, 2A-B, 500A-D) comprises a plurality of sensors spaced angularly apart from one another around the ram axis (AA') and the determined measures comprise measures of the height (14A, 14B) of the sidewall of a can body (10) for more than one location around the circumference of the can body.

3. A method according to claim 1 or 2, wherein the or each eddy current sensor (2, 2A-B, 500A-D) is mounted within a stripper housing (502) comprising a stripper provided with stripping fingers.

4. A method according to any one of the preceding claims and comprising determining whether each of the measures is within a pre-determined range.

5. A method according to claim 4, wherein the pre-determined range has a width of less than 10 mm, less than 5 mm, or less than 2 mm.

6. A method according to any one of the preceding claims and comprising correlating the signal(s) (300) with data indicative of the position of the ram (106) along the ram axis (A-A').

7. A method according to claim 6, wherein the position data is obtained from a linear encoder or from a rotary encoder configured to be turned by a shaft used to drive the ram (106).

8. A method according to any one of the preceding claims and comprising generating an operator alarm or notification in the event that can body sidewall defects or deterioration are identified.

9. A method of operating a can bodymaker (101) and comprising using the method of any one of the preceding claims to detect defects or deterioration in the sidewalls of can bodies (10) during production and, in the event of such detection, adjusting one or more operating parameters of the bodymaker or of a production line within which the bodymaker (101) is located, to mitigate the occurrence of defects or said deterioration.

10. A method according to claim 9, wherein the one or more operating parameters include a rate of production.

11. A method according to claim 9, where the operating parameter is a parameter of a component of the production line upstream or downstream of the bodymaker (101), for example a cup press.

12. A computer program product comprising instructions which, when executed by a computer, cause the computer to carry out the method of any one of claims 1 to 11.

13. Apparatus for detecting defects or deterioration in the sidewalls of can bodies (10) during production of the can bodies within a can bodymaker (101), each can body being formed by pushing a cup, mounted on a punch of a reciprocating ram (106), through one or more dies (4) contained within a tool pack (107) of the bodymaker, the apparatus comprising:
a housing (502) within which are mounted one or more eddy current sensors (2, 2A-B, 500A-D), the housing and sensors being configured for attachment within the can bodymaker adjacent to the toolpack such that the or each sensor is arranged around the ram axis (A-A') adjacent to an exit end of the tool pack; and
a computer processing unit in wired or wireless communication with the or each sensor to receive therefrom the output signals of the sensor(s),
the apparatus **characterised by** the computer processing unit being configured to process the output signals to detect passage of open ends of can body sidewalls past the sensor(s) and to thereby determine measures of the heights of can body sidewalls, and to analyse the determined measures to identify can body sidewall defects or deterioration.

14. A system comprising a can bodymaker (101) in combination with the apparatus of claim 13, the can bodymaker (101) comprising a punch (8) mounted on a reciprocating ram (106) and one or more dies (4) contained within a tool pack (107), the housing and sensors being attached within the can bodymaker such that the or each sensor is arranged around the ram axis adjacent to an exit end of the tool pack.

## Patentansprüche

1. Verfahren zum Erfassen von Mängeln oder Verschlechterung in den Seitenwänden von Dosenkörpern (10) während der Herstellung der Dosenkörper in einer Dosenkörpermaschine (101), wobei jeder Dosenkörper durch Drücken eines auf einem Stempel (8) eines hin- und hergehenden Stößels (106) installierten Bechers durch eine oder mehrere Matrizen (4) geformt wird, die in einem Werkzeugsatz (107) der Dosenkörpermaschine enthalten sind, wobei das Verfahren Folgendes umfasst:
Gewinnen von Ausgangssignalen (300) von einem oder mehreren Wirbelstromsensoren (2, 2AB, 500A-D), die um die Stößelachse (A-A') außerhalb des Werkzeugsatzes und an einem Austrittsende des Werkzeugsatzes eingerichtet sind,
Verfahren **gekennzeichnet durch**:
Verarbeiten der Ausgangssignale, um den Durchgang offener Enden der Dosenkörperseitenwände an dem/den Sensor(en) vorbei zu erfassen und dadurch Maße der Höhen (14A, 14B) der Dosenkörperseitenwände zu bestimmen; und
Analysieren der bestimmten Maße zum Identifizieren von Defekten oder Verschlechterung der Dosenkörperseitenwände.

2. Verfahren nach Anspruch 1, wobei der eine oder die mehreren Sensoren (2, 2A-B, 500A-D) eine Vielzahl von Sensoren umfassen, die winkelig von einander um die Stößelachse (AA') beabstandet sind, und die bestimmten Maße Maße der Höhe (14A, 14B) der Seitenwand eines Dosenkörpers (10) an mehr als einer Stelle um den Umfang des Dosenkörpers umfassen.

3. Verfahren nach Anspruch 1 oder 2, wobei der bzw. jeder Wirbelstromsensor (2, 2A-B, 500A-D) in einem Abstreifergehäuse (502) installiert ist, das einen mit Abstreiferfingern versehenen Abstreiferer umfasst.

4. Verfahren nach einem der vorstehenden Ansprüche, das das Bestimmen, ob jedes der Maße innerhalb eines vorbestimmten Bereichs liegt, umfasst.

5. Verfahren nach Anspruch 4, wobei der vorbestimmte Bereich eine Breite von weniger als 10 mm, weniger als 5 mm oder weniger als 2 mm aufweist.

6. Verfahren nach einem der vorstehenden Ansprüche, das das Korrelieren des Signals/der Signale (300) mit Daten, die die Position des Stößels (106) entlang der Stößelachse (A-A') angeben, umfasst.

7. Verfahren nach Anspruch 6, wobei die Positionsdaten von einem Lineargeber oder von einem Drehgeber gewonnen werden, der dazu konfiguriert ist, von einer Welle, die zum Antreiben des Stößels (106) verwendet wird, gedreht zu werden.

8. Verfahren nach einem der vorstehenden Ansprüche, das das Erzeugen eines Alarms oder einer Benachrichtigung für den Bediener umfasst, falls Defekte oder Verschlechterung der Dosenkörperseitenwände identifiziert werden.

9. Verfahren zum Betreiben einer Dosenkörpermaschine (101), das das Verwenden des Verfahrens eines der vorstehenden Ansprüche zum Erfassen von Defekten oder Verschlechterung in den Seitenwänden von Dosenkörpern (10) während der Herstellung umfasst, und im Falle einer solchen Erfassung das Einstellen eines oder mehrerer Betriebsparameter der Dosenkörpermaschine oder einer Herstellungslinie, in der sich die Dosenkörpermaschine (101) befindet, um das Auftreten von Defekten oder dieser Verschlechterung zu verringern.

10. Verfahren nach Anspruch 9, wobei der eine oder die mehreren Betriebsparameter die Herstellungsrate beinhalten.

11. Verfahren nach Anspruch 9, wobei der Betriebsparameter ein Parameter einer Komponente der Herstellungslinie stromaufwärts oder stromabwärts der Dosenkörpermaschine (101) ist, beispielsweise einer Becherpresse.

12. Computerprogrammprodukt, das Anweisungen umfasst, die, wenn sie von einem Computer ausgeführt werden, bewirken, dass der Computer das Verfahren nach einem der Ansprüche 1 bis 11 durchführt.

13. Einrichtung zum Erfassen von Defekten oder Verschlechterung in den Seitenwänden von Dosenkörpern (10) während der Herstellung der Dosenkörper in einer Dosenkörpermaschine (101), wobei jeder Dosenkörper durch Drücken eines auf einem Stempel eines hin- und hergehenden Stößels (106) installierten Bechers durch eine oder mehrere Matrizen (4) geformt wird, die in einem Werkzeugsatz (107) der Dosenkörpermaschine enthalten sind, wobei die Einrichtung Folgendes umfasst:
ein Gehäuse (502), in dem ein oder mehrere Wirbelstromsensoren (2, 2A-B, 500A-D) installiert sind, wobei das Gehäuse und die Sensoren zur Befestigung innerhalb der Dosenkörpermaschine angrenzend an den Werkzeugsatz derart konfiguriert sind, dass der bzw. jeder Sensor um die Stößelachse (A-A') an einem Austrittsende des Werkzeugsatzes eingerichtet ist; und
eine Computerverarbeitungseinheit, die drahtgebunden oder drahtlos mit dem oder jedem Sensor in Kommunikation steht, um von diesem die Ausgangssignale des Sensors/der Sensoren zu empfangen,
Einrichtung **dadurch gekennzeichnet, dass** die Computerverarbeitungseinheit dazu konfiguriert ist, die Ausgangssignale zu verarbeiten, um den Durchgang offener Enden von Dosenkörperseitenwänden an dem Sensor/den Sensoren vorbei zu erfassen und dadurch Maße der Höhe der Dosenwandkörper zu bestimmen und die bestimmten Maße zu analysieren, um Defekte oder Verschlechterung der Dosenkörperseitenwände zu identifizieren.

14. System, das eine Dosenkörpermaschine (101) in Kombination mit der Einrichtung nach Anspruch 13 umfasst, wobei die Dosenkörpermaschine (101) einen Stempel (8) umfasst, der auf einem hin- und hergehenden Stößel (106) installiert ist, und eine oder mehrere Matrizen (4), die in einem Werkzeugsatz (107) enthalten sind, wobei das Gehäuse und die Sensoren innerhalb der Dosenkörpermaschine derart angebracht sind, dass der bzw. jeder Sensor um die Stößelachse an ein Austrittsende des Werkzeugsatzes angrenzend eingerichtet sind.

## Revendications

1. Procédé de détection de défauts ou de détériorations dans les parois latérales de corps de boîte métallique (10) lors de la production des corps de boîte métallique dans une machine de fabrication de corps de boîte métallique (101), chaque corps de boîte métallique étant formé en poussant une coupelle, montée sur un poinçon (8) d'un piston alternatif (106), à travers une ou plusieurs matrices (4) contenues dans un bloc d'outils (107) de la machine de fabrication de corps de boîte métallique, le procédé comprenant :
l'obtention de signaux de sortie (300) à partir d'un ou plusieurs capteurs de courants de Foucault (2, 2A-B, 500A-D) agencés autour de l'axe du piston (A-A') à l'extérieur du bloc d'outils et à proximité d'une extrémité de sortie du bloc d'outils,
le procédé étant **caractérisé par** :
le traitement des signaux de sortie pour détecter le passage d'extrémités ouvertes de parois latérales de corps de boîte métallique devant le ou les capteurs et ainsi déterminer des mesures des hauteurs (14A, 14B) des parois latérales de corps de boîte métallique ; et
l'analyse des mesures déterminées pour identifier des défauts ou des détériorations de paroi latérale de corps de boîte métallique.

2. Procédé selon la revendication 1, dans lequel le ou les capteurs (2, 2A-B, 500A-D) comprennent une pluralité de capteurs espacés angulairement les uns des autres autour de l'axe du piston (AA') et les mesures déterminées comprennent des mesures de la hauteur (14A, 14B) de la paroi latérale d'un corps de boîte métallique (10) pour plusieurs emplacements autour de la circonférence du corps de boîte métallique.

3. Procédé selon la revendication 1 ou 2, dans lequel le ou chaque capteur de courants de Foucault (2, 2A-B, 500A-D) est monté dans un boîtier de dénudeur (502) comprenant un dénudeur muni de doigts de dénudage.

4. Procédé selon l'une quelconque des revendications précédentes et comprenant la détermination déterminant si chacune des mesures se situe dans une plage prédéterminée.

5. Procédé selon la revendication 4, dans lequel la plage prédéterminée présente une largeur inférieure à 10 mm, inférieure à 5 mm ou inférieure à 2 mm.

6. Procédé selon l'une quelconque des revendications précédentes et comprenant la corrélation du ou des signaux (300) avec des données indicatives de la position du piston (106) le long de l'axe du piston (A-A').

7. Procédé selon la revendication 6, dans lequel les données de position sont obtenues à partir d'un codeur linéaire ou d'un codeur rotatif configuré pour être mis en rotation par un arbre utilisé pour entraîner le piston (106).

8. Procédé selon l'une quelconque des revendications précédentes et comprenant la génération d'une alarme ou d'une notification d'opérateur dans le cas où des défauts ou des détériorations de paroi latérale de corps de boîte métallique sont identifiés.

9. Procédé de fonctionnement d'une machine de fabrication de corps de boîte métallique (101) et comprenant l'utilisation du procédé selon l'une quelconque des revendications précédentes pour détecter des défauts ou des détériorations dans les parois latérales de corps de boîte métallique (10) pendant la production et, dans le cas d'une telle détection, l'ajustement d'un ou plusieurs paramètres de fonctionnement de la machine de fabrication de corps ou d'une chaîne de production dans laquelle se trouve la machine de fabrication de corps (101), afin d'atténuer l'apparition de tels défauts ou de telles détériorations.

10. Procédé selon la revendication 9, dans lequel le ou les paramètres de fonctionnement incluent un taux de production.

11. Procédé selon la revendication 9, dans lequel le paramètre de fonctionnement est un paramètre d'un composant de la chaîne de production en amont ou en aval de la machine de fabrication de corps (101), par exemple une presse de coupelle.

12. Produit de programme informatique comprenant des instructions qui, lorsqu'elles sont exécutées par un ordinateur, amènent l'ordinateur à réaliser le procédé selon l'une quelconque des revendications 1 à 11.

13. Appareil de détection de défauts ou de détériorations dans les parois latérales de corps de boîte métallique (10) lors de la production des corps de boîte métallique dans une machine de fabrication de corps de boîte métallique (101), chaque corps de boîte métallique étant formé en poussant une coupelle, montée sur un poinçon d'un piston alternatif (106), à travers une ou plusieurs matrices (4) contenues dans un bloc d'outils (107) de la machine de fabrication de corps de boîte métallique, l'appareil comprenant :
un boîtier (502) dans lequel sont montés un ou plusieurs capteurs de courants de Foucault (2, 2A-B, 500A-D), le boîtier et les capteurs étant configurés pour être fixés à l'intérieur de la machine de fabrication de corps de boîte métallique, à proximité du bloc d'outils, de sorte que le ou chaque capteur soit agencé autour de l'axe du piston (A-A'), à proximité d'une extrémité de sortie du bloc d'outils ; et
une unité de traitement informatique en communication filaire ou sans fil avec le ou chaque capteur pour recevoir de celui-ci les signaux de sortie du ou des capteurs,
l'appareil étant **caractérisé par le fait que** l'unité de traitement informatique est configurée pour traiter les signaux de sortie afin de détecter le passage d'extrémités ouvertes de parois latérales de corps de boîte métallique devant le ou les capteurs et ainsi déterminer des mesures de hauteur des parois latérales de corps de boîte métallique, et pour analyser les mesures déterminées afin d'identifier des défauts ou des détériorations de parois latérales de corps de boîte métallique.

14. Système comprenant une machine de fabrication de corps de boîte métallique (101) en combinaison avec l'appareil selon la revendication 13, la machine de fabrication de corps de boîte métallique (101) comprenant un poinçon (8) monté sur un piston alternatif (106) et une ou plusieurs matrices (4) contenues dans un bloc d'outils (107), le boîtier et les capteurs étant fixés à l'intérieur de la machine de fabrication de corps de boîte métallique de telle sorte que le ou chaque capteur soit agencé autour de l'axe du piston à proximité d'une extrémité de sortie du bloc d'outils.
